Europäisches Patentamt

European Patent Office

Office européen des brevets

(11) Publication number: **0 495 481 A2**

# EUROPEAN PATENT APPLICATION

(21) Application number: **92100604.5**

(22) Date of filing: **15.01.92**

(51) Int. Cl.⁵: **G01N 21/88**, G06F 15/00

(30) Priority: **16.01.91 JP 15878/91**
**24.01.91 JP 23935/91**

(43) Date of publication of application:
**22.07.92 Bulletin 92/30**

(84) Designated Contracting States:
**BE DE FR GB IT NL SE**

(71) Applicant: **EZEL INC.**
**2-22-2 Koishikawa**
**Bunkyo-ku Tokyo 112(JP)**

(72) Inventor: **Kumagai, Ryohei**
**c/o Ezel Inc., 2-22-2, Koishikawa, Bunkyo-ku**
**Tokyo 112(JP)**
Inventor: **Hiiro, Kaoru**

c/o Ezel Inc., 2-22-2, Koishikawa, Bunkyo-ku
Tokyo 112(JP)
Inventor: **Shimizu, Harumi**
c/o Ezel Inc., 2-22-2, Koishikawa, Bunkyo-ku
Tokyo 112(JP)
Inventor: **Oosaka, Manabu**
c/o Ezel Inc., 2-22-2, Koishikawa, Bunkyo-ku
Tokyo 112(JP)
Inventor: **Takahashi, Tooru**
c/o Ezel Inc., 2-22-2, Koishikawa, Bunkyo-ku
Tokyo 112(JP)

(74) Representative: **Patentanwälte Grünecker,**
**Kinkeldey, Stockmair & Partner**
**Maximilianstrasse 58**
**W-8000 München 22(DE)**

(54) **Liquid crystal panel inspection method.**

(57) It is possible to inspect a liquid crystal panel and find a kind of defect without skill in a short time by the present invention.

A part is inspected by using an extracted reference part which is extracted by i) calculating a vector data starting from a characteristic point on a contour of a part which is judged to be defectless, ii) determining the contour of a reference part according to the vector data obtained in i), and iii) extracting a reference part on the contour in ii).

The kind of a part is judged by classifying the distribution of the two-dimensional static value of a defective part according to the distribution map of the two-dimensional static value of the histogram of a defective part obtained by experience.

Fig. 7

EP 0 495 481 A2

## FIELD OF THE INVENTION

The present invention relates to a inspection method for liquid crystal panel used for a display device of a computer and so fourth.

## BACKGROUND OF THE INVENTION

When liquid crystal panels are manufactured, several percent of defective products occurs. Conventionally, the defective products are found out by eye-inspection. First, observing the luminousness of the surface of a panel energized, the defective parts are roughly found out. Next, observing each part of a defective liquid crystal panel in detail, it is inspected where the defective parts are and how the parts are defective.

## SUMMARY OF THE INVENTION

Such eye-inspection is, however, very difficult. It takes several hours to inspect one liquid crystal panel even for one skilled in the inspection.

Inspection method for automatic inspection of IC may be applicable to inspection of liquid crystal. This method is one of a pattern matching method, in such an IC image is compared with a blueprint. Since the parts on the liquid crystal has a thickness and rather three-dimensional, the edge of the parts appears as shadowy lines, differently from the flat surface of IC. The input apparatus for the image of liquid crystal is adjusted not to take the shadowy lines, however a part of the lines may be inputted due to optical aberration and light condition. In such an image, it is impossible to find out defective parts without fail by comparing the parts with a template.

The present invention is invented to provide a liquid crystal panel inspection method, by which it is possible for the unskilled to inspect in a short time.

Defining a part of a liquid crystal panel as a reference part and another part corresponding to the reference part as a part to be inspected, a part to be inspected is judged if it is defective or not by comparing the part to be inspected with the reference part through the steps of: i) obtaining a vector data starting from a point on a contour of the reference part, ii) selecting a reference part and calculating a coordinate of the starting point for inspecting a new liquid crystal panel, iii) determining a contour of the reference part according to the vector data in i), iv) extracting a reference part by the contour in iii) and a part to be inspected is examined using the extracted reference part.

The kind of the defective part under inspection is judged by classifying the distribution of two dimensional statistics value of it according to the distribution map obtained through experience with respect to the two dimensional statistics value of the histogram of a defective part.

## BRIEF DESCRIPTION OF THE DRAWINGS

Fig. 1 shows a convex corner of a right angle as a start point for extracting a part.

Fig. 2 shows a flow chart to explain Method 1.

Fig. 3 shows a flow chart to explain Method 2.

Fig. 4 shows a flow chart to explain a method for extracting a reference part.

Fig. 5 is a diagram to show a method for searching a contour.

Fig. 6 shows a performance of density projection of X-axis and Y-axis using masks.

Fig. 7 shows a perspective view of an apparatus used for the inspection method of this invention.

Fig. 8 shows a flow chart to explain the second embodiment.

Fig. 9 shows the kinds of defects according to the two dimensional statistics value and the variance.

Fig. 10 shows a spots defect.

Fig. 11 shows a blot defect.

Fig. 12 shows a break defect.

Fig. 13 shows a pin point defect.

Fig. 14 shows a hole defect.

## PREFERRED EMBODIMENT OF THE PRESENT INVENTION

When a liquid crystal panel is inspected, a reference part without defect is extracted first from the liquid crystal panel. The way for the judgment if it is defective or defectless is many. Among the ways, there is a way to judge a part if it is defective or not which selects the parts group with maximal number of members among groups classified according to characteristics value after selecting a plurality of parts and comparing the characteristics value of them. This is based on the inventors' experience that the defective part is less then a several percent of all parts. The selection of the reference part and each part to be inspected can be practiced by the methods below.

= Method 1 =

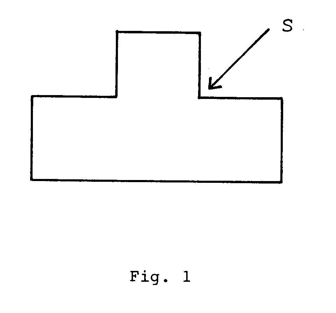

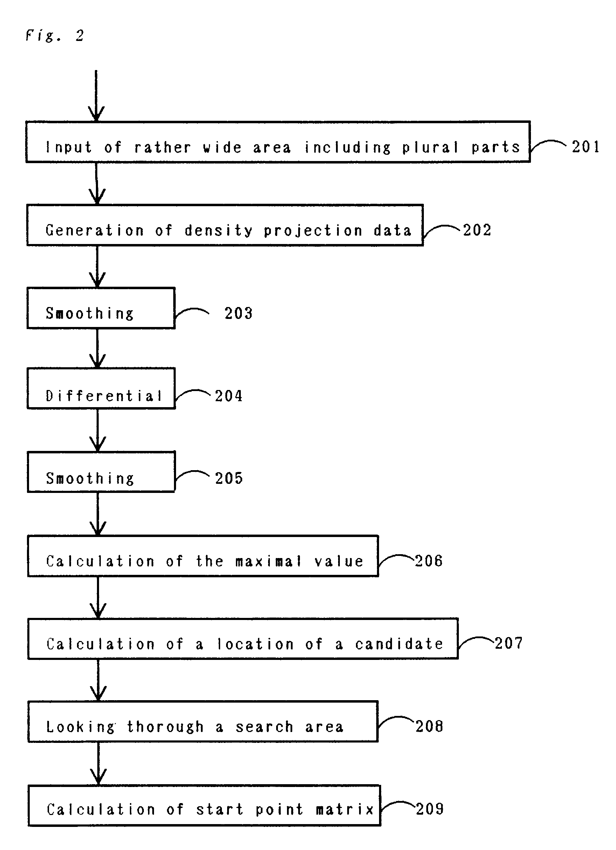

Obtaining the normal figure without defect beforehand, the vector data of it is generated. As a contour of a liquid crystal part is straight lines generally, a precise figure can be reproduced with a little data by vectorizing it. When a part is extracted with vector data, the contour of the part is traced from a start point after deciding the start point. The characteristic point of the part is appropriate for the start point, such as a convex or concave corner of a rather big right angle (Fig. 1). The convex or concave corner of a right angle can be extracted by generating a density projection on the location of the characteristic point (candidate location, hereinafter) as shown in Fig. 2, and calculating the minimal point of it. That is, performing density projection on a candidate location and the neighbor area (search area, hereinafter), the location with the most convex or concave corners is judged to be the convex corner or the concave corner finally. Candidate locations are calculated by the following steps. i) The density projection is performed as to differentiated values in an image including plural parts. ii) The maximal value is obtained. iii) The candidate locations are found out in the search area by searching them by the distance of parts arrangement from the start point of the maximal value, because liquid crystal parts of the same size are arranged by the same distance. The size of the search area is decided by experience.

Here, method 1 is explained along to the flow chart in Fig. 2.

First, rather wide area including plural parts is inputted as an image on step 201. The size of the area is decided by the process speed of the device and the capacity for holding data at a time. Therefore, one block for the processing is to be the area corresponding to the capacity for the process unit if high speed processing is expected by parallel processing.

On step 202, density projection in X-direction and Y-direction in each image inputted on step 201 is calculated. As the density projection data probably contains noise, smoothing is performed to each density projection data on step 203.

On step 204, density projection data reduced noise is differentiated. The data through step 204 is performed smoothing for further reduction of noise on step 205.

On step 206, calculating the mode (the value with the most frequency) of the data obtained after step 205, the coordinates of the mode is defined as the contour of a part.

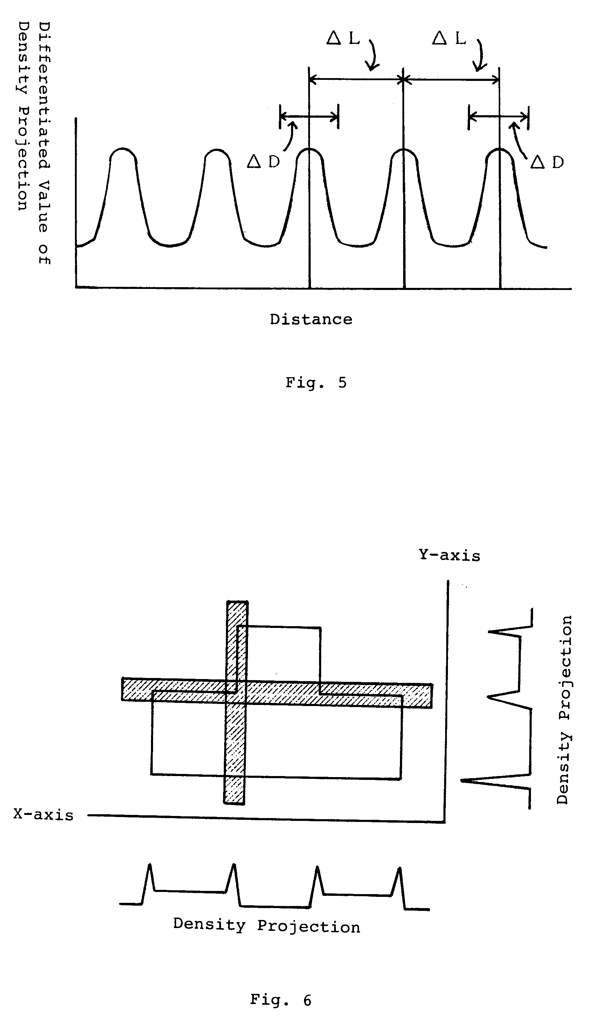

Parts of liquid crystal panel is arranged by the same distance and the distance can be known beforehand. When a contour is found on step 206, other contours are searched from the starting point of the contour defining the first contour as the starting point on step 207. The search area is decided beforehand by experience. Here, assuming the contours appear by the distance of ΔL and the search area is ΔD, the area within the distance from a start point of

$$\Delta L \pm \Delta D / 2$$

is searched on step 208. The location with the maximal differential value is judged to be the contour (Fig. 5). The start point matrix can be calculated by it (step 209). The second contour and contours after it are all searched from the start point of the first contour, or they are searched sequentially the adjacent contour from the start point of the first found-out contour.

= Method 2 =

Differently from method 1, method 2 detects the contour of every part and extracts it. The object for the judgment to extract a contour is density change pattern in gray image in the case of extracting a contour. As lines of a contour of a part are all horizontal or vertical and are also low density, the minimal value of the density if obtained tracing the image in horizontal and vertical direction. Three kinds of patterns are adopted for the patterns of density change which show the minimal value. That is, the location of density decrease direction (trough starting point), the location of the minimal density (the middle trough point) and the location of density increase direction (trough ending point).

All of these characteristic points are once to be the indicative candidates for specifying a trough and the indicative candidates caused by noise are excepted after. In order to perform it, the mean density is calculated between an indicative candidate and the next one, and whether the indicative candidate is true indication or not is judged according to the comparison of the mean density and the minimal density within the section of the adjacent indicative candidates. Here, assuming that the mean density is "Dm", the minimal density is "dm", the coefficient calculated by experience (a constant) is "K", and the following formula is satisfied, it is judged that a true trough exists in the segment.

$$K \times Dm = dm \quad (1)$$

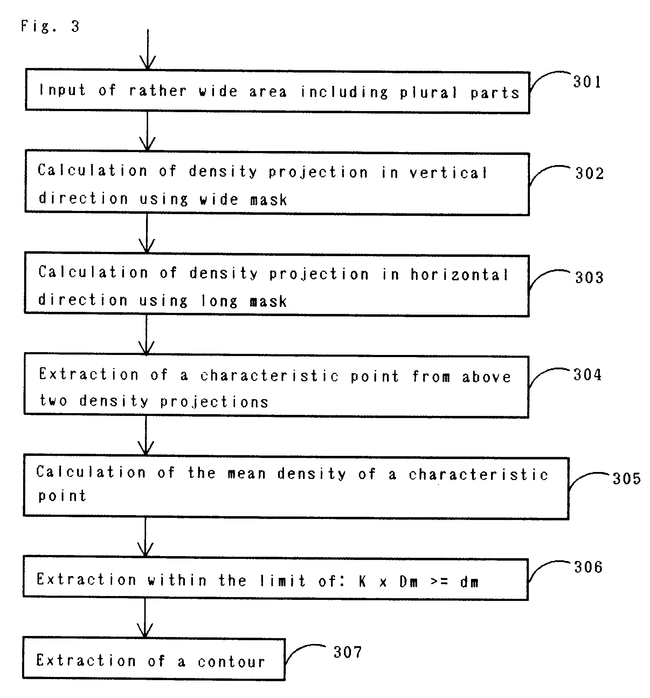

Method 2 is explained along the flow chart in Fig. 3.

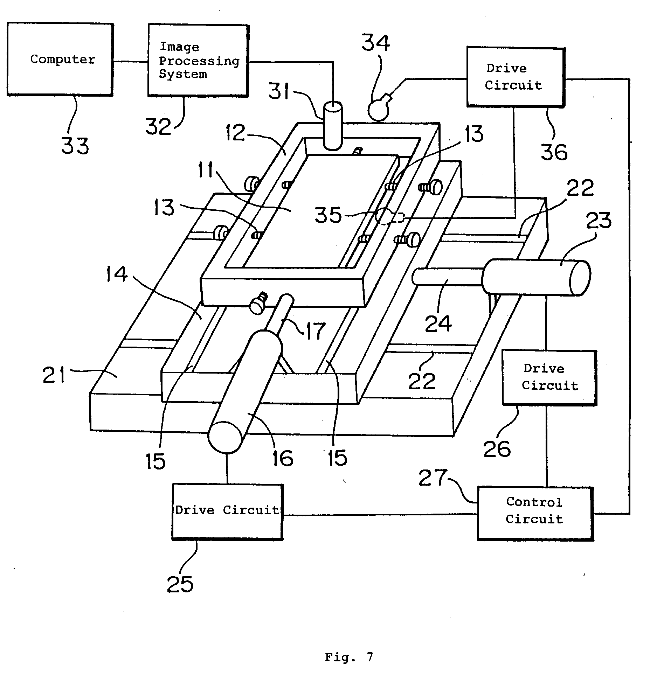

First, on step 301, an image is inputted in the same way on step 201 in Fig. 2. Density projections in the horizontal direction and in the vertical direction are generated concerning to each part in this image, and the contour of a part is extracted according to the density projection next. Density projection in the horizontal direction is executed on step 302, and the one in the vertical direction is executed on step 303. The long mask is used for the density projection in horizontal direction and wide mask is used for the one in vertical direction. Using such masks, a contour extraction according to partial characteristic is possible (Fig. 6).

On step 304, calculating the "trough starting point", "middle trough point" and "trough ending point" are calculated and they are stored once. The mean density (Dm) and the minimal density (dm) between the characteristic points are calculated. On step 305, and formula (1) is performed on step 306. The true trough is obtained according to the calculation on step 307.

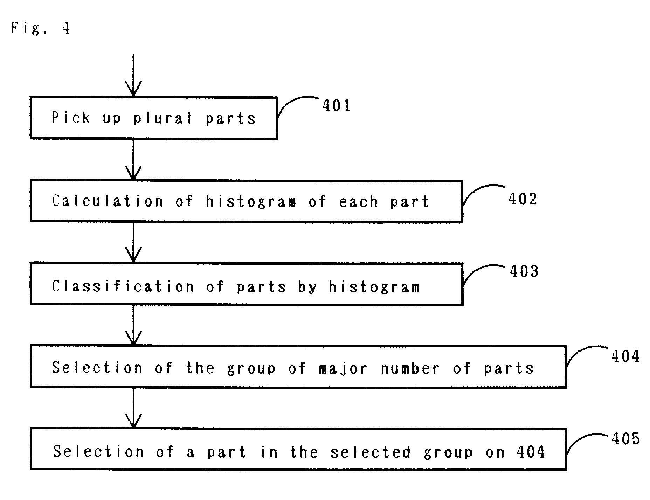

The reference part can be extracted through the processings of flow chart in Fig. 4. First, a plurality of parts are extracted by the method mentioned above on step 401 and the histogram of each part is calculated on step 402. As a histogram is an important characteristic concerning to a defect of a part, the normal part can be extracted by classifying into groups according to the histogram.

Considering the percentage of defective parts of liquid crystal panels, the normal parts probably belong to the group with maximal number of members. That is, settling any number of the sample parts, the normal parts from the maximal number of group. Therefore, choosing the group with maximal number on step 404, a part is to be selected from among the members of the maximal number of group on step 405 so as to pick a normal part.

It is possible for method 2 to extract a part easily according to vector data when only one point on the contour of a part to be extracted is picked up after generating vector data of a contour according to the method, because the method extracts the contour of a part precisely. Performing this processing to all parts of a panel to be inspected in this way, reference part and other parts are extracted.

A part is judged if it is defective or not by comparing the histograms and other characteristic data of the reference part and each part of the liquid crystal panel between.

The second embodiment of the liquid crystal panel with respect to this application is described below referring to attached drawings.

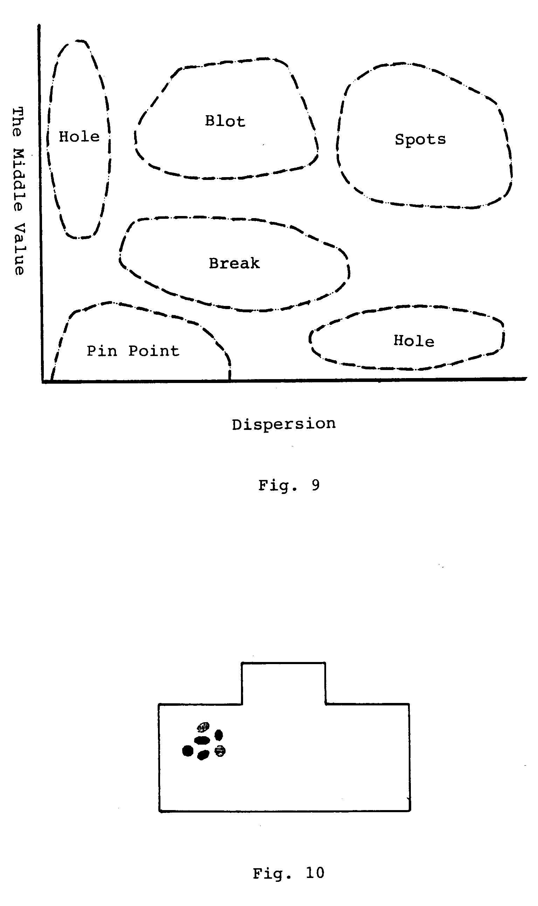

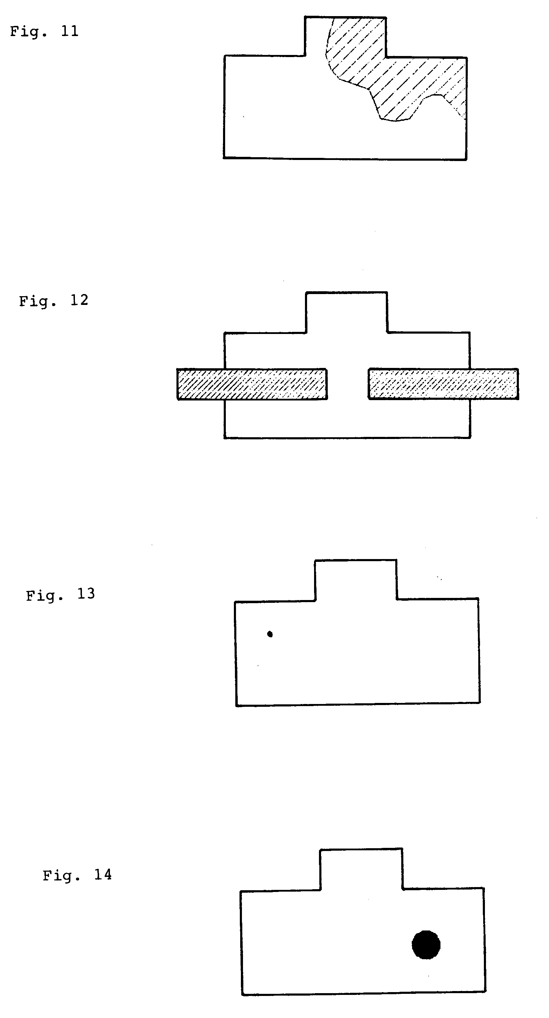

It is known that the kinds of defects of parts are classified into five: i) spots defect (Fig. 10), ii) blot defect (Fig. 11), iii) break defect (Fig. 12), iv) pin point defect (Fig. 13) and v) hole defect (Fig. 14). The characteristic of two dimensional statistics value in these defects are directed attention to on the present invention.

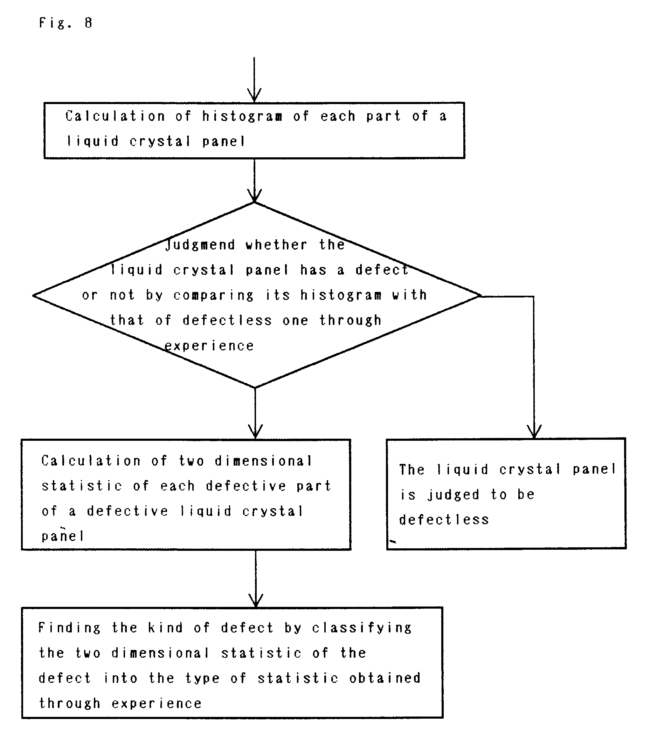

The process is shown in Fig. 8. the image of each part of a liquid crystal panel to be inspected is inputted by a camera and the histogram of the image is calculated on step 101. The histogram is compared with that of a defectless part on step 102. It is possible to judge if a defect part exists or not in a liquid crystal panel to be inspected by the comparison.

The liquid crystal panel to be inspected without defective part is judged to be a good panel (on step 103). Reversely, a liquid crystal panel to be inspected with a defective part is judged to be a defective panel. The defective panel is further inspected what kind of defective part exists in it.

The kind of the defective part is classified into five, as mentioned. It is clear by experience that each kind of defect has each characteristic distribution of the two dimensional statistics value of the histogram.

Therefore, calculating the two dimensional statistics value of the histogram of a defective part (on step 104), it is possible to judge the kind of the defect according to the area where the value belongs to (on step 105).

In this case, the representative density and variance are used as the two dimensional statistics value. The mean value or the middle value is used as the representative density, for example.

The distribution of the two dimensional statistics value is described referring Fig. 9. Usually, each part of a liquid crystal panel has fixed figure and fixed material. Therefore, when an image of a part is inputted by a camera and the histogram of the image is calculated, pixels of a normal part converges at a particular brightness.

However, the brightness of the defect has a peak because the brightness of the defective part is different from that of the normal part. For example, when a spot-type defect exists on a part, the brightness has wide variance because the brightness on the area of the defect makes a large difference.

On the other hand when the existent defect is a pin-point, the brightness on the area of the defect makes a small variance because it converges on a value.

The brightness of a defect part of a blot and a break is little different from that of a normal one. The distribution shows a peak neighbor the peak of the histogram of a normal part. The variance of those defect part is larger than a hole and smaller than a spot. That is, though there is little difference between the variance of a blot and a break, the middle value of a blot is larger than that of a break.

When the existent defect is a hole, the two-dimensional statistics value has two area of the variance.

Fig. 7 shows an apparatus used for the present invention. A liquid crystal panel 11 is located inside of a support frame 12 so as to fixed on the frame 12 with bolt 13. Support frame 12 movable mounted on a pair of rails 15 on a movable plate 14. A cylinder device 16 is fixed on the end of movable plate 14, whose piston rod 17 is connected with the support frame 12. Movable plate 14 is movably mounted on a pair of rails 22 on fixed plate 21. Similar to the movable plate 14, the fixed plate 21 is provided with a cylinder device 23 at one end whose piston rod 24 is connected with the movable plate 14.

Support frame 12 moved in parallel to movable frame 14 by controlling cylinder device 16, and movable plate 14 moves in parallel to fixed plate 21 by controlling cylinder device 23. Cylinder devices 16 and 23 are driven by drive circuits 25 and 26, respectively, so as to move the piston rods 17 and 24 forward or backward. Drive circuits 25 and 26 controlled by a control circuit 27.

A microscope 31 is supported by a fixed frame not shown above the liquid crystal panel 11. Each pattern is inputted through the microscope 31, as described later. The image of this pattern is inputted to image processing system 32 and various processings are performed therein. Image processing system 32 is controlled by computer 33.

LIght source 34, such as stroboscope, is provided for lighting the support frame 12 above. It is fixed to support frame 12 and move with it. Light source 34 is driven by a drive circuit 35 which is controlled by control circuit 27.

As mentioned above, it is possible to inspect whole of a liquid crystal panel in a short time without skill precisely, and to extract defective part showing the kind of defect by the present invention.

## Claims

1. An inspection method of liquid crystal panel, defining a part of a liquid crystal panel as a reference part and another part corresponding to said reference part as a part to be inspected, for judging if it is defective or not by comparing said part to be inspected with said reference part comprising steps of:
   i) obtaining a vector data starting from a point on a contour of said reference part,
   ii) selecting a reference part and calculating a coordinate of said starting point for inspecting a new liquid crystal panel,
   iii) determining a contour of said reference part according to said vector data in i),
   iv) extracting a reference part by said contour in iii) and a part to be inspected is examined using said extracted reference part.

2. An inspection method of liquid crystal panel claimed in claim 1, wherein said vector data of said contour of said reference part is generated so as to trace edge of a concavity caused by the minimal value of density projection of each part of reference part.

3. An inspection method of liquid crystal panel claimed in claim 2, wherein a candidate of an edge of a concavity is judged if it is true edge of a concavity or not by the steps of:
   i) defining three points as candidates of an edge of said concavity; a) a point on which a differential coefficient changes from 0 to minus, b) a point on which a deferential coefficient changes from plus to 0, and c) a point on which a differential coefficient changes from minus to plus,
   ii) defining a value multiplied a predetermined value to the mean density of candidates of an edge of a concavity as a threshold,
   iii) comparing values of density projection of these candidates with said threshold, said candidates are judged to be true edge of a concavity when said density projection value is equal to or less than said threshold.

4. An inspection method of liquid crystal panel claimed in claim 1, wherein:
   i) a differential coefficient of a liquid crystal panel is calculated,
   ii) the maximal value of said differential coefficient is calculated,
   iii) the location of said maximal value is regarded as an edge of a part in a liquid crystal panel,
   iv) a part is extracted according to a parallel cycle of a part calculated beforehand starting from said edge in iii),
   v) statics values of histogram of plural parts are calculated,
   vi) said parts in v) are classified, and
   vii) a part belonging to a group of major parts in classification is selected as a reference part.

5. An inspection method of liquid crystal panel claimed in claim 1, wherein a figure is defined as a reference part, which is formed by pixels with mean density of pixels corresponding to all parts one another in said group of major parts in said classification.

6. An inspection method of liquid crystal panel claimed in claim 3, wherein diagonal contour line is also performed density projection.

7. An inspection method of liquid crystal panel for judging if a part to be inspected is defective or defectless, wherein a standard for said judgment is settled by classifying a distribution of two dimensional statistics value of histogram into some area.

8. An inspection method of liquid crystal panel claimed in claim 7, wherein said two dimensional statistics values value is a representative density and variance.

9. An inspection method of liquid crystal panel claimed in claim 8, wherein a representative density is the mean value.

10. An inspection method of liquid crystal panel claimed in claim 8, wherein a representative density is the middle vale.

11. An inspection method of liquid crystal panel claimed in claim 8, wherein a defect is judged according to the area to which two dimensional statistics value of a part to be inspected belongs.

Fig. 1

Fig. 2

| Input of rather wide area including plural parts | ~201 |

| Generation of density projection data | ~202 |

| Smoothing | 203 |

| Differential | 204 |

| Smoothing | 205 |

| Calculation of the maximal value | ~206 |

| Calculation of a location of a candidate | ~207 |

| Looking thorough a search area | 208 |

| Calculation of start point matrix | 209 |

Fig. 3

```
         │
         ▼
┌──────────────────────────────────────────────┐
│ Input of rather wide area including plural parts │──┐ 301
└──────────────────────────────────────────────┘
         │
         ▼
┌──────────────────────────────────────────────┐
│ Calculation of density projection in vertical   │──┐ 302
│ direction using wide mask                        │
└──────────────────────────────────────────────┘
         │
         ▼
┌──────────────────────────────────────────────┐
│ Calculation of density projection in horizontal │──┐ 303
│ direction using long mask                        │
└──────────────────────────────────────────────┘
         │
         ▼
┌──────────────────────────────────────────────┐
│ Extraction of a characteristic point from above │──┐ 304
│ two density projections                          │
└──────────────────────────────────────────────┘
         │
         ▼
┌──────────────────────────────────────────────┐
│ Calculation of the mean density of a characteristic │──┐ 305
│ point                                            │
└──────────────────────────────────────────────┘
         │
         ▼
┌──────────────────────────────────────────────┐
│ Extraction within the limit of: K x Dm >= dm     │──┐ 306
└──────────────────────────────────────────────┘
         │
         ▼
┌──────────────────────────────────────────────┐
│ Extraction of a contour                          │──┐ 307
└──────────────────────────────────────────────┘
```

Fig. 4

| | |
|---|---|
| Pick up plural parts | 401 |
| Calculation of histogram of each part | 402 |
| Classification of parts by histogram | 403 |
| Selection of the group of major number of parts | 404 |
| Selection of a part in the selected group on 404 | 405 |

Fig. 5

Fig. 6

Fig. 7

Fig. 8

```
                        │
                        ▼
┌──────────────────────────────────────────────┐
│ Calculation of histogram of each part of a    │
│ liquid crystal panel                           │
└──────────────────────────────────────────────┘
                        │
                        ▼
            ╱ Judgmend whether the ╲
          ╱  liquid crystal panel has a defect ╲
        ╱  or not by comparing its histogram with ╲──────────┐
          ╲  that of defectless one through  ╱              │
            ╲   experience  ╱                                │
                        │                                    │
                        ▼                                    ▼
┌──────────────────────────────────┐   ┌──────────────────────────┐
│ Calculation of two dimensional    │   │ The liquid crystal panel  │
│ statistic of each defective part  │   │ is judged to be           │
│ of a defective liquid crystal     │   │ defectless                │
│ panel                             │   └──────────────────────────┘
└──────────────────────────────────┘
                        │
                        ▼
┌──────────────────────────────────────────────┐
│ Finding the kind of defect by classifying     │
│ the two dimensional statistic of the          │
│ defect into the type of statistic obtained    │
│ through experience                            │
└──────────────────────────────────────────────┘
```

The Middle Value

Hole

Blot

Spots

Break

Pin Point

Hole

Dispersion

Fig. 9

Fig. 10

Fig. 11

Fig. 12

Fig. 13

Fig. 14